(19) Europäisches Patentamt / European Patent Office / Office européen des brevets

(11) **EP 2 653 365 B1**

(12) **EUROPÄISCHE PATENTSCHRIFT**

(45) Veröffentlichungstag und Bekanntmachung des Hinweises auf die Patenterteilung:
**04.06.2014  Patentblatt 2014/23**

(21) Anmeldenummer: **12164573.3**

(22) Anmeldetag: **18.04.2012**

(51) Int Cl.:
**B61L 5/18** *(2006.01)*       **G08G 1/095** *(2006.01)*
**F21V 29/00** *(2006.01)*     **B61L 5/12** *(2006.01)*
**F21V 23/04** *(2006.01)*     **H05B 33/00** *(2006.01)*
**F21W 111/00** *(2006.01)*   **F21Y 101/02** *(2006.01)*

(54) **Lichtsignal enthaltend eine LED-Lichtquellen-Anordnung zum Ersatz einer Glühlampen-Anordnung**

Light signal containing an LED light source assembly for replacing a bulb assembly

Signal lumineux contenant un agencement de sources lumineuses DEL en remplacement d'un agencement de lampes à incandescence

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2013  Patentblatt 2013/43**

(73) Patentinhaber: **Siemens Schweiz AG**
**8047 Zürich (CH)**

(72) Erfinder:
• **Windisch, Arthur**
**8184 Bachenbülach (CH)**
• **Schmid, Rolf**
**8712 Stäfa (CH)**

(74) Vertreter: **Kley, Hansjörg**
**Siemens AG**
**Postfach 22 16 34**
**80506 München (DE)**

(56) Entgegenhaltungen:
**EP-A2- 2 124 507     WO-A1-2006/080921**
**AT-A4- 505 154**

• **ZABEL M ET AL: "LED - EINE NEUE GENERATION VON LICHTQUELLEN FUER EISENBAHNSIGNALE", SIGNAL + DRAHT, TELZLAFF VERLAG GMBH. DARMSTADT, DE, Nr. 9, 1. September 2000 (2000-09-01), Seiten 31-33, XP009033674, ISSN: 0037-4997**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf ein Lichtsignal gemäss dem Patentanspruch 1.

Zwergsignale (fr: signaux nains suisse) werden bei der Schweizerischen Bundesbahnen SBB und bei mehr als 30 schweizerischen Privatbahnen verwendet und dienen als Lichtsignal zur Sicherung von Fahrstrassen innerhalb eines Bahnhofes. Zwergsignale erfüllen damit sowohl Funktionen für den Rangier- als auch den Zugfahrbetrieb. In der Regel werden Zwergsignale immer links vom Gleis aufgestellt. Zwergsignale befinden sich direkt am Boden neben dem Gleis, nur in speziellen Einzelfällen werden sie zur besseren Sichtbarkeit erhöht angebracht, sei es an einem Masten oder an einem Perrondach oder an einer Hausmauer.

Für den Ersatz von Glühlampen durch LED's ist in der Schrift US 2004/0070519 A1 [1] eine Signalleuchte offenbart, bei der Glühlampen durch LED-Leuchtmittel ersetzbar sind. Dabei werden zu optischen Anpassung Fresnel Linsen eingesetzt. Die LED-Leuchtmittel beinhalten dabei bereits eine eigene Energieversorgung. Diese Lösung beinhaltet keine elektrische Nachbildung der Glühlampe.

Auch AT 505154 A4 zeigt eine ähnliche Anordnung.

Thermostrahler bzw. Glühlampen erzeugen ihr Licht mit einer glühenden Wendel im Temperaturbereich von ca. 2500 bis 3200°K. Das bedeutet, dass diese Lichtquellen durch ihre konstruktive Auslegung und ihren hohen Temperatur -Arbeitspunkt des Wendels eine sehr geringe Beeinflussung der bestimmungsgemässen Funktion durch den auftretenden Umgebungs-Temperaturbereich über das Jahr aufweisen. Darüber ist die die Infrarotstrahlung sehr geeignet und hilfreich, ein Beschlagen, Vereisen oder Zuschneien des Lichtaustritts in der kalten Jahreszeit aufgrund der Wärmezufuhr zu verhindern und dadurch den freien Austritt des Lichtes zu erhalten. Auch diese Eigenschaft gilt es bei einem Ersatz von Glühlampen mit LED's zu beachten.

Bis heute ist es nicht gelungen, in einem Migrationsschritt nur die die Glühlampen in einem Zwergsignal durch LED-Technik zu ersetzen. Heute sind nur Lösungen auf dem Markt, welche auf einem neuen Produkt (komplett neues Zwergsignal mit Gehäuse und anderer physikalischen Schnittstelle, d.h. Stromwerte angepasst) aufbauen. Um die Kompatibilität eines LED-Leuchtmittels mit einer Glühlampe herzustellen, müssen insbesondere die elektrischen Parameter übereinstimmen. Für die Realisierung sind die Kenngrössen der Glühlampe von 40V/20W entscheidend. Die in den Zwergsignalen verwendeten Glühlampen haben sich über die vielen Jahre bewährt und die Lokomotivführer haben sich auf die resultierenden Wahrnehmungseigenschaften eingestellt. Aufgrund der installierten Basis, d. h. der Ansteuerungsprinzipien der Domino-Stellwerke von Integra AG und der elektronischen Stellwerke muss die 40V/20W - Schnittstelle zu den Zwergsignalen beibehalten werden. In diesem Fall muss an der Stellwerksinnenanlage nichts verändert werden. Dies ist begründet durch die sicherheitstechnische Zulassung der einzelnen Komponenten, z.B. der Zulassung durch das BAV, http://www.bav.admin.ch .

Der vorliegenden Erfindung liegt die Aufgabe zugrunde ein Lichtsignal mit einer LED-Lichtquellen-Anordnung zugeben, die in bestehenden Signalen die Glühlampen-Anordnung ablöst, so dass die elektrische Ansteuerung unverändert bleibt und in betrieblicher Hinsicht kein Unterschied zwischen mit LED's oder mit Glühlampen bestückten Lichtsignalen besteht.

Diese Aufgabe wird durch die im unabhängigen Patentanspruch angegebenen Massnahmen gelöst. Vorteilhafte Ausgestaltungen der Erfindung sind in weiteren Ansprüchen angegeben.

Die Erfindung löst die vorgenanten Teilprobleme, nämlich

    i) Lichtstromversorgung,
    ii) Wärmeabfuhr,
    iii) gleiches betriebliches Verhalten unabhängig von der Jahreszeit

wie folgt:

    i) Lichtstromversorgung
    An der Lichtstromversorgung ändert sich nichts, es keinerlei Anpassungen auf der Stellwerkseite erforderlich und auch keinerlei weitere sicherheitstechnische Nachweise.

    ii) Wärmeabfuhr
    Die im Lastwiderstand "vernichtete" Energie muss thermisch abgeführt werden, da die Lebensdauer von LED-Quellen durch unnötige thermische Belastung massiv reduziert wird. Daher sind örtlich verschiedene Lastwiderstände vorgesehen, die abhängig von der Temperaturbedingungen von einer Steuerung angeschaltet werden und im Sommer eine unnötige thermische Belastung verhindern.

    iii) Gleiches betriebliches Verhalten unabhängig von der Jahreszeit
    Durch das Vorhandensein eines Temperatursensors im Innern des Lichtsignals wird ein im Innern des Lichtsignals angeordneter Lastwiderstand zugeschaltet, so dass im Winter die Abwärme dazu dient, einen Schnee- oder Eisansatz am Signal zu verhindern. Damit kann eine manuelle Befreiung von Schnee und Eis vermieden werden.

So können sich die folgenden Vorteile zusätzlich ergeben:

    b) Die Unterbringung der elektrischen Komponenten auf einer Leiterplatte erlaubt eine einfache Installation im Zwergsignal bzw. Lichtsignal.

b) Für Platzierung und Anschluss der benötigten Lastwiderstände sind Anpassungen hinsichtlich Verkabelung und Fixierung erforderlich. Dies stellt jedoch einen weit geringeren Aufwand dar, als eine neue Ansteuerung in einem Stellwerk vorzusehen.

Die vorgenannten zwei Vorteile ermöglichen, sukzessive in einem Bahnhof die Zwergsignale nachzurüsten. Dies wäre bei einer sogenannt zentralen Lösung, also mit einer neuen Ansteuerung auf der Stellwerkseite nicht möglich. Sukzessives Nachrüsten heisst, dass bei Ausfall eines bestehenden Glühlampen-Zwergsignals die vorgenannten Komponenten quasi als Ersatzteile gehalten werden können.

Die Erfindung wird nachfolgend anhand der Zeichnung beispielsweise näher erläutert. Dabei zeigen:

Figur 1 Zwergsignal mit den drei Signalbegriffen;

Figur 2 funktionale Übersicht zur LED-Lichtquellen-Anordnung;

Figur 3 Ausführungsform der Erfindung mit nahe der Frontlinse angeordneten Lastwiderständen;

Figur 4 Ausführungsform der Erfindung externem Lastwiderstand;

Figur 5 Ausführungsform der Erfindung externem Lastwiderstand.

Die Ausführungsbeispiele der vorliegenden Erfindung beziehen sich auf Zwergsignale. Die Erfindung ist jedoch auf jede Art von Lichtsignalen für den Eisenbahnbetrieb anwendbar, bei der Glühlampen durch eine LED-Leuchte ersetzt werden ohne dass an der Ansteuerung etwas geändert werden muss.

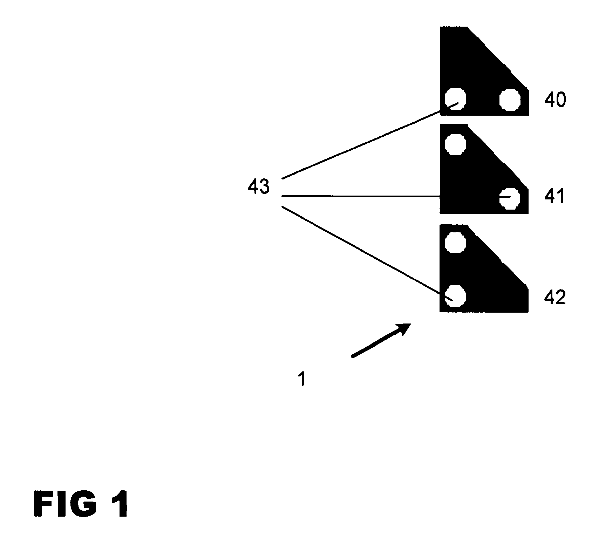

Figur 1 zeigt eine Ansicht eines Zwergsignals 1 mit den drei verschiedenen Signalbegriffe:

- HALT 40,
- FAHRT MIT VORSICHT 41 oder kurz VORSICHT 41,
- FAHRT 42.

Auf der Rückseite eines Zwergsignals 1 werden die Begriffe VORSICHT 41 oder FAHRT 42 mit einem weissen Licht angezeigt; dazu wird die Lichtquelle für die obere Leuchte benutzt; das Licht wird dabei über einen Spiegel auf die Rückseite geleitet. Diese Rücksignalisierung als leuchtender schräger Balken bedeutet, dass eine Fahrstrasse auf FAHRT 42 oder auf VORSICHT 41 freigegeben ist und somit ein entgegenkommendes Fahrzeug zu erwarten ist. Die Rücksignalisierung erlaubt auch dass ein Lokführer das Zwergsignal 1 von hinten lesen kann, dies ist insbesondere im Rangierdienst von Bedeutung.

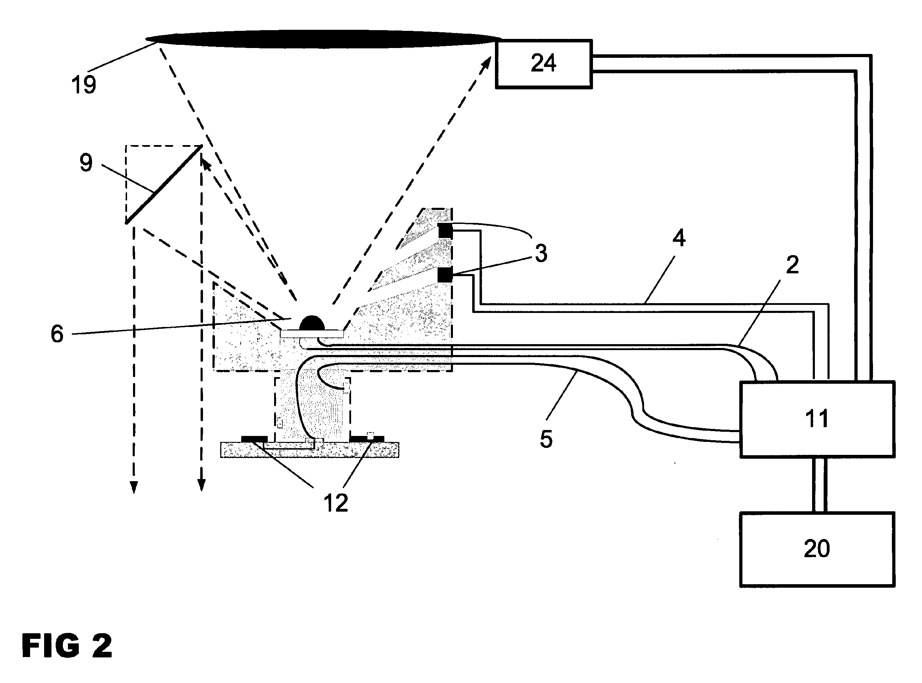

Figur 2 zweigt eine Anordnung zum Betreiben von LED-Lichtquellen in einer funktionalen Übersicht.

Die elektrische Ansteuerung der LED-Quelle 6 erfolgt ab einer Steuerung 11 - auch Steuerlogik 11 genannt - , die von der Stellwerkseite her gespeist wird. Der Spiegel 9 dient dazu, die Rückleuchte die mit der oberen vorderen Signalleuchte korrespondiert (vgl. Figur 1) mit der gleichen Lichtquelle zu beaufschlagen. Die Steuerlogik 11 enthält einen Energiebalancer, an dem ein externer Lastwiderstand 20 angeschlossen ist. Ebenso ist am Rand der Frontlinse 19 wenigstens ein Lastwiderstand 24 angeordnet. Üblicherweise sind die Lastwiderstände auf 40W ausgelegt. Durch die Steuerung 11 wird eine elektrische Gesamtlast von 40W geregelt, um gegenüber dem Stellwerk die Schnittstellen bzw. Lastspezifikation einzuhalten. Dies ist notwendig, weil die LED-Quelle 6 eine Leistungsaufnahme von rund 2 bis 3 Watt hat gegenüber 18 bis 20W für eine Glühlampe. Ebenso sind noch rund 2W für die Steuerung einzurechnen. Die zu ersetzende Glühlampe hat jedoch eine Leistungsaufnahme von 20W, sodass rund 30 bis 34W zu verbrauchen sind. Hier ist zu berücksichtigen, meistens zwei LED-Leuchten (entsprechend 2 Glühlampen) eingesetzt sind (in den Figuren nicht dargestellt). Abhängig von der Innentemperatur T des Zwergsignals erfolgt eine alternative Zuschaltung von Lastwiderständen. Dazu ist in der Nähe der LED-Quelle 6 ein Temperaturfühler 12 angeordnet, der über eine Anschlussleitung 5 mit der Steuerung 11 verbunden ist. Ist die vom Temperaturfühler 12 festgestellte Temperatur oberhalb eines Schwellwertes $T_S$ gemäss der Bedingung

$$T \geq T_S$$

wird für die Energieabfuhr ein ausserhalb des Signalgehäuses angeordneter Widerstand 20 angesteuert. Für $T_S$ kann z.B. festgelegt sein: $T_S = 10°C$.
Gilt für die Temperatur $T < T_S$ wird der vorgenannte im Signalgehäuse angeordneter Widerstand 24 angesteuert.

Für die signaltechnische Überwachung der LED-Quellen 6 sind je nach zu erreichendem Sicherheitslevel Lichtsensoren 3 vorgesehen, die über eine Anschlussleitung 4 mit der Steuerung 11 verbunden sind. Dieser Lichtsensor 3 stellt fest, ob die LED-Quelle 6 Licht aussendet. In der Steuerung 11 ist der Signalbegriff bekannt. Somit kann aus dieser Rückführung 4 ein Fehlerfall erkannt werden und abhängig von den (gesetzlichen oder normativen) Sicherheitsvorgaben entweder eine Rückmeldung an das Stellwerk vorgenommen werden und/oder das Zwergsignal 1 kann gänzlich auf «dunkel» geschaltet werden. Auf «dunkel» geschaltete Signale haben den Signalbegriff HALT.

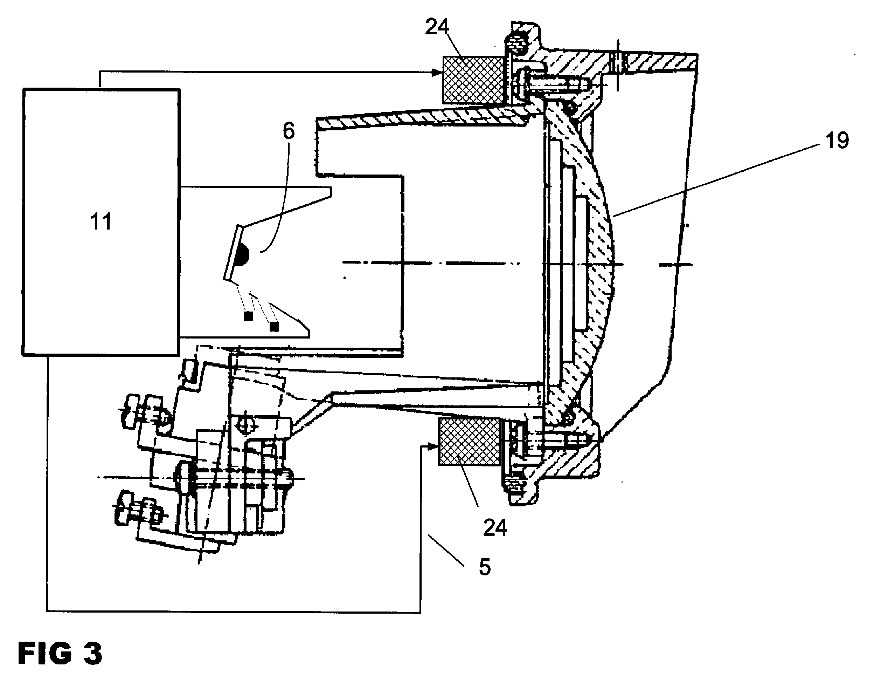

Die konstruktive Anordnung der Widerstände ist den Figuren 3 bis 5 zu entnehmen.

Figur 3 zeigt die Anordnung von zwei Lastwiderständen 24 nahe der Frontlinse 19 eines Signals. Hier sind die beiden Lastwiderstände kleiner zu dimensionieren, dass sie zusammen rund 40W elektrische Leistung verbrauchen können. Durch die Anordnung gerade bei der Frontlinse 19 ist sichergestellt, dass durch die Wärmeabfuhr über das Glas sich kein Schnee und kein Eis bilden kann, das die Sichtbarkeit des von der LED-Quelle 6 ausgesendeten Lichts beeinträchtigt.

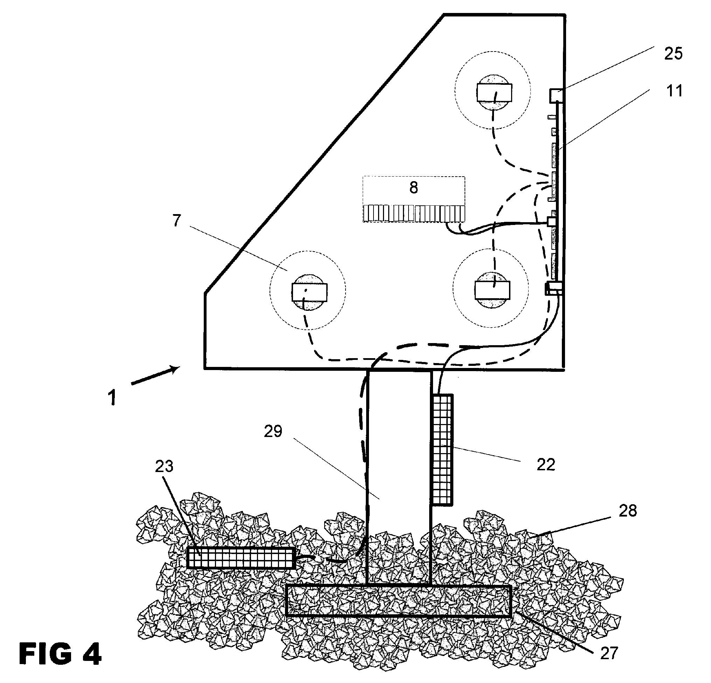

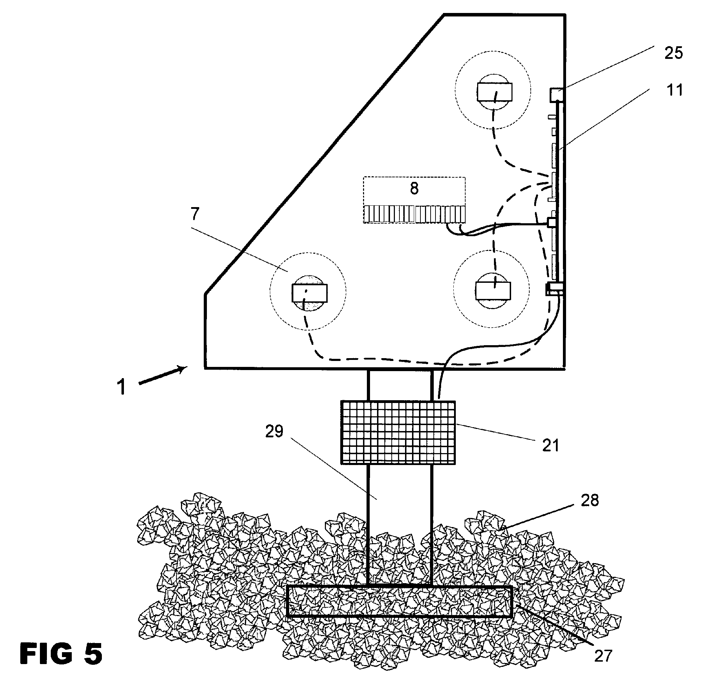

Die Figuren 4 und 5 zeigen verschiedene konstruktive Anordnungen der ausserhalb des Signalgehäuses angeordneten Lastwiderstände 21, 22 und 23. Die Steuerung 11 ist - ausgebildet als Leiterplatte 11 mit elektronischen Bauelementen - an einer Innenwand des Gehäuses des Signals 1 mit einer Halterung 26 befestigt. Der Anschluss an die stellwerkseitige Ausrüstung erfolgt über einen Klemmenblock 8. Gemäss Figur 4 kann ein Lastwiderstand 22 am Fuss des Signals 1 befestigt sein oder der Lastwiderstand 23 ist im Schotter eingebettet.

Wie in Figur 5 gezeigt, ist der Lastwiderstand als Lastwiderstandsring 21 um den Fuss 29 des Zwergsignals 1 ausgebildet. Sowohl bei der Ausführungsform nach Figur 4 wie auch nach Figur 5 ist das Signal 1 ist wie üblich mit einem Fuss 27 im Schotter eingebettet.

Die vorstehenden Ausführungsformen sind besonders auf ein Zwergsignal 1 bezogen. Die Erfindung ist jedoch auf jede Art von Lichtsignal 1 anwendbar, bei der bestehende Glühlampen durch LED-Quellen 6 ersetzt werden, ohne dass an der elektrischen Ansteuerung von einer Zentrale bzw. Stellwerk etwas geändert werden muss.

## Liste der Bezugszeichen, Glossar

| 1 | Zwergsignal; Signal, Lichtsignal |
|---|---|
| 2 | Anschlussleitung zu LED-Quelle |
| 3 | Lichtsensor |
| 4 | Anschlussleitung zu Lichtsensor |
| 5 | Anschlussleitung zu Temperatursensor |
| 6 | LED-Quelle |
| 7 | Sockel für LED-Quelle |
| 8 | Anschlussklemmen |
| 9 | Spiegel zur Rückführung des Lichts an die Rückleuchte des Zwergsignals |
| 11 | Steuerung; Steuerlogik; Leiterplatte mit elektronischen Bauelementen |
| 12 | Temperatursensor, Wärmefühler |
| 19 | Frontlinse des Zwergsignals |
| 20 | Externer Lastwiderstand, von der LED-Quelle abgesetzt angeordnet |
| 21 | Externer Lastwiderstand, als Lastwiderstandsring ausgebildet |
| 22 | Externer Lastwiderstand, am Fuss des Zwergsignals angeordnet |
| 23 | Externer Lastwiderstand, im Schotter beim Zwergsignals angeordnet |
| 24 | Interner Lastwiderstand im Gehäuse in der Nähe der Frontlinse angeordnet |
| 25 | Halterung |
| 27 | Sockel des Zwergsignals |
| 28 | Schotter |
| 29 | Fuss des Zwergsignals |
| 40 | Signalbegriff HALT |
| 41 | Signalbegriff FAHRT MIT VORSICHT, Beginn oder Fortsetzung der Fahrt; unmittelbar nach dem Zwergsignal muss mit einem Hindernis gerechnet werden |
| 42 | Signalbegriff FAHRT |
| 43 | Leuchte, Frontleuchte |
| 44 | Rückleuchte |
| LED | light emitting diode |
| T | Temperatur, Innentemperatur |
| $T_S$ | Schwellwert, z.B. $T_S$ = 10°C |

## Liste der zitierten Dokumente

[1] US 2004/0070519 A1
«Compact light emitting diode retrofit lamp and method for traffic signal lights»
Wu et al.

## Patentansprüche

1.  Lichtsignal (1) enthaltend eine LED-Lichtquellen-Anordnung (6, 11) zum Ersatz einer Glühlampen-Anordnung, wobei das Lichtsignal (1) an seiner Frontseite einer Frontlinse (19) aufweist und die LED-Lichtquelle von einer Steuerung (11) aktivierbar ist,
    **dadurch gekennzeichnet, dass**

    - im Innern des Lichtsignals (1) ein Temperaturfühler (12) angeordnet ist, der mit der Steuerung (11) verbunden ist;
    - für eine Nachbildung der elektrischen Glühlampen-Eigenschaften von der Steuerung (11) wenigstens zwei Lastwiderstände (20, 21, 22, 23, 24) mit von der LED-Quelle (6) nicht benötigter elektrischer Energie beaufschlagt werden; wobei ein Lastwiderstand (24) im Innern des Lichtsignals (1) und ein Lastwiderstand (21, 22, 23) ausserhalb des Lichtsignals (1) angeordnet ist und dass
    - der ausserhalb des Lichtsignals (1) angeordnete Lastwiderstand (21, 22, 23) mit Energie beaufschlagt wird, wenn in der Steuerung (11) ein Temperaturwert (T) oberhalb eines Schwellwertes (Ts) detektiert wird und dass der innerhalb des Lichtsignals (1) angeordnete Lastwiderstand (24) mit Energie beaufschlagt wird, wenn in der Steuerung (11) ein Temperaturwert (T) unterhalb eines Schwellwertes (Ts) detektiert wird.

**2.** Lichtsignal (1) nach Anspruch 1, **dadurch gekennzeichnet, dass** der ausserhalb des Lichtsignals (1) angeordnete Lastwiderstand als Lastwiderstandsring (21) um den Fuss (29) des Lichtsignals (1) angelegt ist.

**3.** Lichtsignal (1) nach Anspruch 1, **dadurch gekennzeichnet, dass** der ausserhalb des Lichtsignals (1) angeordnete Lastwiderstand am Fuss (29) des Lichtsignals (1) angebracht ist.

**4.** Lichtsignal (1) nach Anspruch 1, **dadurch gekennzeichnet, dass** der ausserhalb des Lichtsignals (1) angeordnete Lastwiderstand im das Lichtsignal (1) umgebenden Schotter (28) eingebettet ist.

**5.** Lichtsignal (1) nach einem der Ansprüche 1 bis 4, **dadurch gekennzeichnet, dass** der innerhalb des Lichtsignals (1) angeordnete Lastwiderstand am Rand der Frontlinse (19) angebracht ist.

**6.** Lichtsignal (1) nach einem der Ansprüche 1 bis 5, **dadurch gekennzeichnet, dass** für die Überwachung von von der LED-Quelle (6) ausgesandtem Licht ein Lichtsensor (3) vorgesehen ist, der mit der Steuerung (11) verbunden ist, die bei Ausbleiben von vom Lichtsensor detektierten Licht alle LED-Quellen (6) des Lichtsignals deaktiviert und eine Meldung an eine externe Einheit abgibt.

**Claims**

**1.** Light signal (1) containing an LED light source assembly (6, 11) for replacing a bulb assembly, wherein the light signal (1) has on its front side a front lens (19) and the LED light source can be activated by a controller (11), **characterised in that**

- a temperature sensor (12) is arranged in the interior of the light signal (1), and is connected to the controller (11);
- for an emulation of the electric bulb properties of the controller (11), at least two load resistors (20, 21, 22, 23, 24) are energised with electrical energy not required by the LED source (6); wherein a load resistor (24) is arranged in the interior of the light signal (1) and a load resistor (21, 22, 23) is arranged outside the light signal (1), and that
- the load resistor (21, 22, 23) arranged outside the light signal (1) is energised when a temperature value (T) above a threshold value (Ts) is detected in the controller (11), and that the load resistor (24) arranged inside the light signal (1) is energised when a temperature value (T) below a threshold value (Ts) is detected in the controller (11).

**2.** Light signal (1) according to claim 1, **characterised in that** the load resistor arranged outside the light signal (1) is designed as a load resistance ring (21) around the foot (29) of the light signal (1).

**3.** Light signal (1) according to claim 1, **characterised in that** the load resistor arranged outside the light signal (1) is attached at the foot (29) of the light signal (1).

**4.** Light signal (1) according to claim 1, **characterised in that** the load resistor arranged outside the light signal (1) is embedded in the gravel (28) surrounding the light signal (1).

**5.** Light signal (1) according to one of claims 1 to 4, **characterised in that** the load resistor arranged inside the light signal (1) is attached at the edge of the front lens (19).

**6.** Light signal (1) according to one of claims 1 to 5, **characterised in that** a light sensor (3) is provided for monitoring light emitted by the LED source (6) and is connected to the controller (11), which in the absence of light detected by the light sensor deactivates all LED sources (6) of the light signal and emits a message to an external unit.

**Revendications**

**1.** Signal lumineux (1) contenant un agencement de sources lumineuses DEL (6, 11) en remplacement d'un agencement de lampes à incandescence, le signal lumineux (1) présentant une lentille frontale (19) sur son côté frontal et la source lumineuse DEL pouvant être activée par une commande (11), **caractérisé en ce que** :

- un capteur de température (12) relié à la commande (11) est situé à l'intérieur du signal lumineux (1) ;
- pour une reproduction des caractéristiques électriques des lampes à incandescence, la commande (11) applique à au moins deux résistances de charge (20, 21, 22, 23, 24) de l'énergie électrique dont la source DEL (6) n'a plus besoin, une résistance de charge (24) étant située à l'intérieur du signal lumineux (1) et une résistance de charge (21, 22, 23) étant située en dehors du signal lumineux (1) ; et

- de l'énergie est appliquée à la résistance de charge (21, 22, 23) située en dehors du signal lumineux (1) lorsqu'une valeur de température (T) supérieure à une valeur seuil (Ts) est détectée dans la commande (11) et de l'énergie est appliquée à la résistance de charge (24) située à l'intérieur du signal lumineux (1) lorsqu'une valeur de température (T) inférieure à une valeur seuil (Ts) est détectée dans la commande (11).

2. Signal lumineux (1) selon la revendication 1, **caractérisé en ce que** la résistance de charge située en dehors du signal lumineux (1) est appliquée en tant que bague de résistance de charge (21) autour du socle (29) du signal lumineux (1).

3. Signal lumineux (1) selon la revendication 1, **caractérisé en ce que** la résistance de charge située en dehors du signal lumineux (1) est montée sur le socle (29) du signal lumineux (1).

4. Signal lumineux (1) selon la revendication 1, **caractérisé en ce que** la résistance de charge située en dehors du signal lumineux (1) est noyé dans le ballast (28) qui entoure le signal lumineux (1).

5. Signal lumineux (1) selon l'une des revendications 1 à 4, **caractérisé en ce que** la résistance de charge située à l'intérieur du signal lumineux (1) est située au bord de la lentille frontale (19).

6. Signal lumineux (1) selon l'une des revendications 1 à 5, **caractérisé en ce qu'**est prévu, pour la surveillance d'une lumière émise par la source DEL (6), un capteur de lumière (3) qui est relié à la commande (11), laquelle désactive toutes les sources DEL (6) du signal lumineux en l'absence de lumière détectée par le capteur de lumière et envoie une signalisation à une unité externe.

FIG 1

FIG 2

**FIG 3**

EP 2 653 365 B1

**FIG 4**

**FIG 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040070519 A1

- AT 505154 A4